Europäisches Patentamt

European Patent Office

Office européen des brevets

(11) Numéro de publication : **0 454 544 B1**

(12) **FASCICULE DE BREVET EUROPEEN**

(45) Date de publication du fascicule du brevet :
**15.06.94 Bulletin 94/24**

(51) Int. Cl.⁵ : **G01L 19/04,** G01L 9/06

(21) Numéro de dépôt : **91401016.0**

(22) Date de dépôt : **17.04.91**

(54) **Transducteur de pression hydrostatique.**

(30) Priorité : **27.04.90 FR 9005371**

(43) Date de publication de la demande :
**30.10.91 Bulletin 91/44**

(45) Mention de la délivrance du brevet :
**15.06.94 Bulletin 94/24**

(84) Etats contractants désignés :
**CH DE ES FR GB IT LI NL**

(56) Documents cités :
**CH-A- 665 028
DE-A- 3 211 968
FR-A- 2 629 640
US-A- 3 034 345
US-A- 3 443 167**

(73) Titulaire : **SCHLUMBERGER INDUSTRIES
50, avenue Jean Jaurès
F-92120 Montrouge (FR)**

(72) Inventeur : **Mosser, Vincent
20, Avenue de Verdun
F-92170 Vanves (FR)**
Inventeur : **Robert, Jean-Louis
12, Impasse du Romarin
F-34920 Le Cres (FR)**
Inventeur : **Contreras, Sylvie
14, Chemin de Notre-Dame
F-34150 Gignac (FR)**

(74) Mandataire : **Hagel, Francis
Etudes et Productions Schlumberger
A L'ATTENTION DU SERVICE BREVETS
26, rue de la Cavée
B.P. 202
F-92142 Clamart Cédex (FR)**

EP 0 454 544 B1

## Description

La présente invention a pour objet un transducteur de pression hydrostatique et/ou de température destiné à mesurer en particulier la pression à laquelle est soumis un fluide à des températures pouvant aller jusqu'à 200°C. Il convient en particulier aux hautes pressions, typiquement de 5 à 20x10$^7$Pa avec une résolution et une précision comparables voire même supérieures à celles des jauges de pression connues.

Le transducteur de l'invention est un transducteur à semi-conducteurs.

Les capteurs de pression à base de semi-conducteurs connus font généralement appel à une structure comportant 4 jauges de silicium disposées en pont de Wheatstone, dopées intentionnellement par des impuretés acceptrices, de telle sorte qu'elles présentent une conductivité de type p, ces jauges étant réalisées par diffusion ou implantation d'impuretés dans un substrat en silicium de conductivité de type n.

L'effet utilisé est la piézorésistivité qui se manifeste par le fait que la résistance électrique de chaque jauge varie en fonction de la contrainte qu'elle subit par application de la pression.

Comme la résistivité du silicium n'est sensible qu'à des contraintes uniaxiales ou biaxiales, et non pas directement à la pression hydrostatique, les capteurs de ce type sont conçus de façon que l'application d'une pression hydrostatique se traduise par l'apparition de telles contraintes. Pour cela, ces capteurs comportent une membrane réalisée par gravure d'une de leurs faces, qui est mise à une pression de référence, tandis que l'autre face, qui supporte les jauges de contrainte, est, mise à la pression hydrostatique à mesurer, de manière qu'apparaisse sur cette face un système de contraintes principalement dirigées selon le plan de la membrane.

Grâce à un choix judicieux de l'emplacement des jauges par rapport à ce système de contraintes, la résistance électrique de deux des jauges du pont augmente avec la pression appliquée, tandis que la résistance électrique des deux autres diminue. Le pont de Wheatstone est alors déséquilibré et un signal dépendant de la pression peut ainsi être obtenu.

Bien que leurs propriétés soient assez satisfaisantes dans de nombreuses applications, ces capteurs présentent cependant quelques limitations qui en gênent l'utilisation dans des cas particuliers, éventuellement importants.

En particulier, non seulement le signal délivré par les capteurs de ce type est intrinsèquement représentatif à la fois de la pression et de la température, mais surtout une correction en température de ce signal représentatif de la pression et de la température s'est toujours avérée extrêmement délicate.

De plus, ces capteurs font apparaître tous les problèmes inhérents à une structure composite, notamment des problèmes de stabilité à long terme et d'hystérésis.

Pour remédier à ces inconvénients, le demandeur a envisagé dans le document FR-A-2 629 640, de réaliser un transducteur de pression hydrostatique à correction de température utilisant comme couche sensible à la pression un matériau ternaire des éléments des colonnes III et V du tableau périodique, épitaxié sur un substrat binaire en matériau III-V, ce transducteur comprenant en outre un capteur de température supporté par le même substrat, apte à fournir un signal représentatif de la température de ce dernier. Dans une réalisation particulière, ce capteur de température comprend aussi une couche semi-conductrice en matériau III-V ternaire empilée sur la couche sensible à la pression et séparée de cette dernière par une couche d'isolation en matériau III-V ternaire.

Ce transducteur apporte des améliorations par rapport aux capteurs à jauges piézorésistives en silicium.

L'invention a pour objet un nouveau transducteur monolithique en matériau III-V permettant notamment de délivrer des signaux électriques fonction de la pression hydrostatique et de la température du milieu environnant le transducteur.

De façon plus précise, l'invention a pour objet un transducteur de pression et/ou de température monolithique, comportant au moins deux couches semi-conductrices en matériaux III-V sensibles à la pression et à la température, une première couche dopée par des impuretés du type donneur, à une première concentration, présentant une première résistivité fonction de la pression et de la température, et une seconde couche dopée par des impuretés du type donneur, à une seconde concentration différente de la première concentration, présentant une seconde résistivité fonction de la pression et de la température et dont la dépendance en température est différente de celle de la première résistivité, ces deux couches étant supportées par un même substrat en matériau III-V.

On obtient ainsi deux valeurs de résistivité pour une même pression et une même température et la résolution de ce système de deux équations à deux inconnues permet de déterminer avec précision la température et la pression du milieu environnant le transducteur.

L'invention est basée notamment sur l'observation que la sensibilité en température des deux couches semi-conductrices en matériau III-V peut être modulée en agissant sur le niveau de dopage des couches sensibles qui est un paramètre facilement contrôlable. En outre, la valeur de la résistivité de ces couches, quant à elle, ne change que d'un facteur 5 à 10 en fonction du dopage, même pour une variation de la concentration

2

de dopant supérieure à $10^3$.

De façon à faciliter la détermination de la pression et de la température d'un milieu donné, il est possible d'utiliser un transducteur de pression et de température comportant une troisième couche semi-conductrice en matériau III-V sensible à la pression et à la température, dopée par des impuretés du même type que les première et seconde couches, à une concentration différente de la première et de la deuxième concentrations et présentant alors une troisième résistivité dont la dépendance en température est différente de celles des première et seconde résistivités. On obtient ainsi trois valeurs de résistivité pour une même pression et une même température.

Les limitations évoquées à propos des capteurs composites ne s'appliquent pas dans le cas présent d'un capteur dont le transducteur est directement sensible à la pression hydrostatique, notamment en raison de la structure homogène de ce dernier.

De façon surprenante, le demandeur a trouvé que deux couches sensibles, de même composition mais de dopage différent, présentaient des sensibilités en pression voisines mais des sensibilités en température très différentes. La sensibilité en pression de ces couches, quant à elle, dépend essentiellement de leur composition.

De façon avantageuse, les couches sensibles à la pression et à la température sont des couches en matériau comportant au moins trois éléments des colonnes III et V du tableau périodique des éléments ; elles présentent de préférence la même composition en éléments III et V. Avantageusement, pour la réalisation d'un capteur de pression, cette composition sensiblement commune est optimisée en fonction de l'application à la mesure de cette grandeur et par exemple de sa sensibilité.

Ces couches peuvent être réalisées en un matériau ternaire dont les éléments III sont en particulier l'aluminium, le gallium et l'indium et dont les éléments V sont en particulier le phosphore, l'arsenic et l'antimoine.

Comme couche sensible, on peut utiliser les matériaux suivants $GaAs_uP_{1-u}$, $In_vGa_{1-v}As_wP_{1-w}$, $Al_xGa_{1-x}As$, avec u, v, w et x choisis dans l'intervalle allant de 0 à 1 de façon que le paramètre de maille soit compatible avec celui du subtrat sur lequel sont épitaxiés ces matériaux.

Dans une forme de réalisation du transducteur de l'invention possédant de bonnes performances, les couches sensibles sont constituées d'arseniure de gallium et d'aluminium de formule $Al_xGa_{1-x}As$ dopé dont la composition x en aluminium est choisie dans l'intervalle allant de 0,22 à 0,40, le substrat étant en arseniure de gallium (GaAs).

De façon avantageuse, la composition x en aluminium des couches sensibles est choisie dans l'intervalle 0,27 à 0,37 et plus précisément dans l'intervalle allant de 0,30 à 0,35.

De préférence, ces couches sensibles à la pression et à la température sont dopées par des impuretés des éléments de la colonne IV du tableau périodique contenant le silicium et plus particulièrement par des ions de silicium, de germanium ou d'étain.

L'écart de concentration en ions dopants entre les deux (voire trois) couches semi-conductrices sensibles est de préférence le plus grand possible. Ainsi, l'une des deux couches peut présenter une concentration en ions dopants aussi faible que possible, compte tenu notamment des impuretés résiduelles du matériau III-V lors de son élaboration, et l'autre couche sensible peut présenter une concentration aussi grande que possible compte tenu des problèmes de saturation en ions dopants dans le matériau III-V. Par exemple, l'une des couches sensibles a une concentration au plus égale à $10^{17}$at/cm$^3$ et l'autre couche a une concentration au moins égale à $10^{18}$at/cm$^3$.

Dans une réalisation permettant une mise en oeuvre simplifiée et reproductible, les couches sensibles sont empilées les unes sur les autres et séparées par une couche de séparation en matériau III-V dont l'énergie de bande de conduction est supérieure à celle des couches sensibles. En outre, elles sont formées par épitaxie.

Pour des couches sensibles en arséniure de gallium et d'aluminium, la couche de séparation peut être aussi constituée d'arséniure de gallium et d'aluminium $Al_yGa_{1-y}As$ avec y>x et choisi en particulier dans l'intervalle allant de 0,25 à 0,50 et de préférence entre 0,35 et 0,45, ce matériau étant non intentionnellement dopé.

Selon un mode de réalisation du transducteur de l'invention, ce dernier comprend un premier élément résistif comprenant une première zone de la première couche sensible et une zone de la seconde couche sensible empilées et séparées par la couche de séparation, et un second élément résistif comprenant une seconde zone de cette première couche sensible.

Il est préférable dans ce cas que la couche sensible présentant la concentration en ions dopants la moins élevée soit située entre la couche sensible présentant la concentration en ions dopants la plus élevée et le substrat.

Avantageusement, le premier élément résistif comprend en outre une première paire de contacts métalliques établis sur la zone de la seconde couche sensible, séparés l'un de l'autre, et le second élément résistif comprend une seconde paire de contacts métalliques établis sur la seconde zone de la première couche sensible, séparés l'un de l'autre.

Pour des couches sensibles en $Al_xGa_{1-x}As$ avec $0{,}23 \leqq x \leqq 0{,}40$, le transducteur de invention peut avantageusement comprendre l'empilement des couches suivantes sur le substrat en GaAs : une couche tampon en GaAs non intentionnellement dopé, une couche de séparation en $Al_zGa_{1-z}As$ non intentionnellement dopé dont la composition z en aluminium varie progressivement de 0 à x, une couche active inférieure en $Al_xGa_{1-x}As$ dopé n, une couche de séparation en $Al_yGa_{1-y}As$ non intentionellement dopé avec $0{,}25 \leqq y \leqq 0{,}50$ et y>x, une couche active supérieure en $Al_xGa_{1-x}As$ dopé n, une couche de protection en $Al_tGa_{1-t}As$ non intentionnellement dopé avec $0{,}22 \leqq t \leqq 0{,}60$, une couche de prise de contact en GaAs dopé $n^+$ et une couche de contacts métalliques.

D'autres caractéristiques et avantages de l'invention ressortiront mieux de la description qui va suivre, donnée à titre illustratif et non limitatif, en référence aux dessins annexés, dans lesquels :

- la figure 1 est une vue en perspective d'un exemple de transducteur conforme à l'invention, selon une première variante ;
- la figure 2 est une vue de dessus du transducteur conforme à l'invention, représenté sur la figure 1 ;
- la figure 3 est une vue en perspective d'un transducteur conforme à l'invention, selon une seconde variante ;

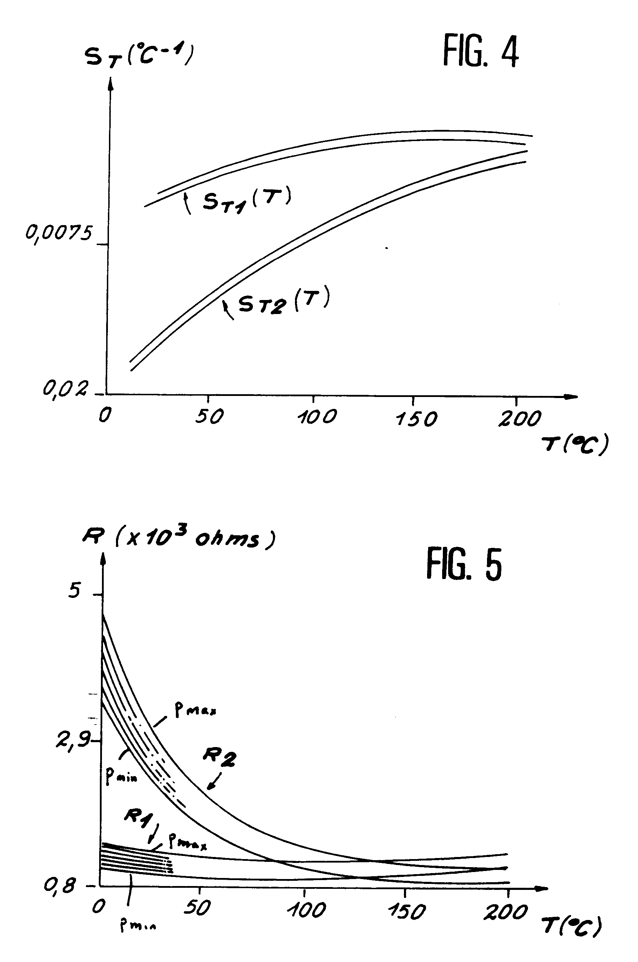

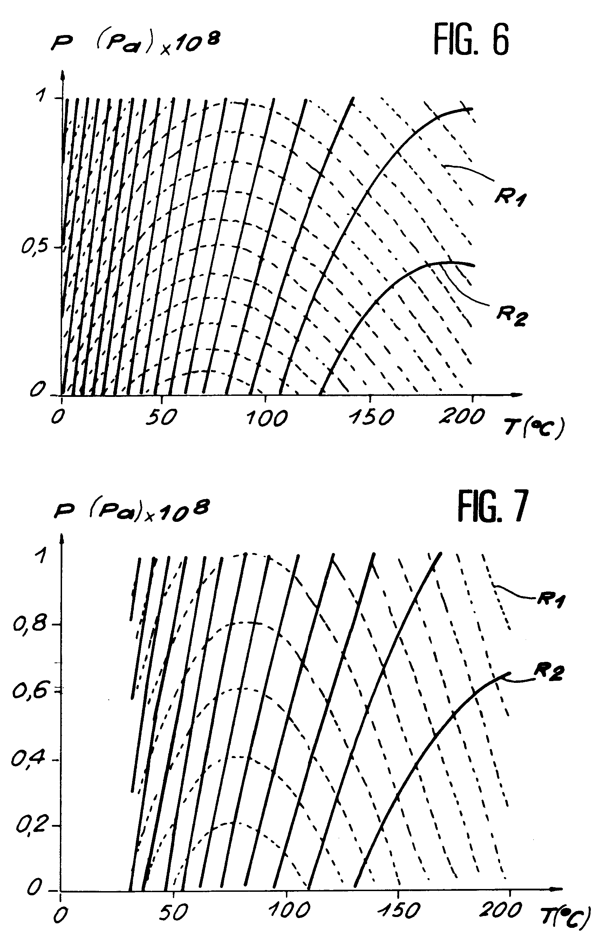

- les figures 4 à 6 donnent des courbes relatives à deux couches en matériau III-V sensibles à la pression et à la température, dopées à des concentrations différentes : la figure 4 donne les variations de la sensibilité en température ST de ces couches exprimée en $°C^{-1}$, en fonction de la température T exprimée en °C, la figure 5 donne les variations de la résistance électrique R de ces couches exprimée en ohms, en fonction de la température T exprimée en °C, et la figure 6 donne des courbes équirésistances des deux couches pour différentes valeurs de la pression exprimée en kPa, en fonction de la température T exprimée en °C ; et
- la figure 7 donne des courbes équirésistances pour différentes valeurs de la pression exprimée en kPa en fonction de la température T exprimée en °C, obtenues expérimentalement pour deux couches semi-conductrices sensibles à la pression et à la température, dopées à des concentrations différentes.

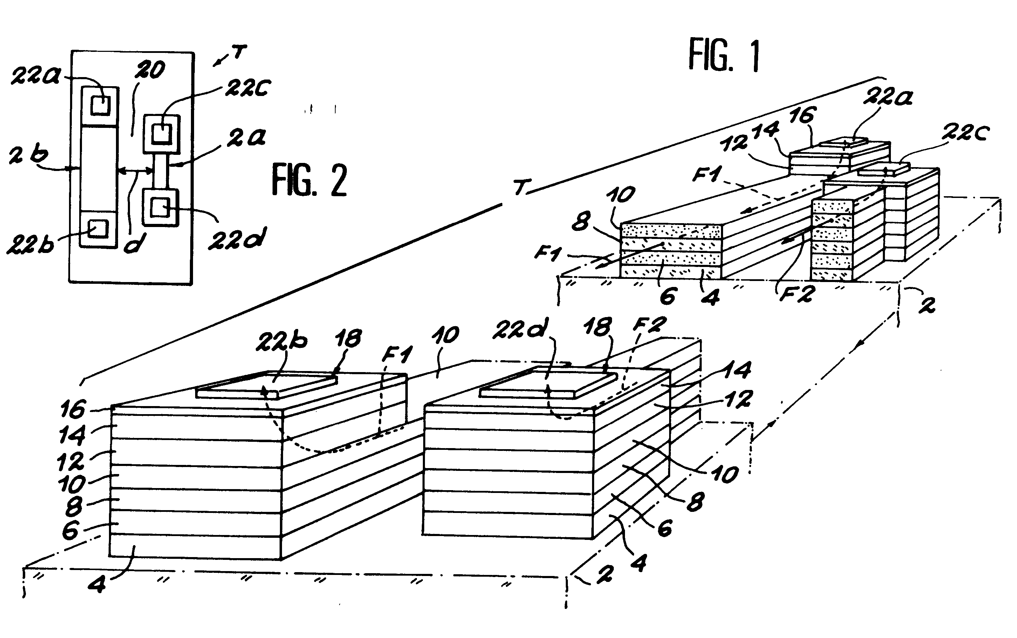

Le transducteur T représenté sur la figure 1 comprend un substrat 2 en matériau III-V et par exemple en GaAs rendu semi-isolant par introduction de chrome en particulier. L'épaisseur de ce substrat est de l'ordre de 300 micromètres et sa résistivité est aussi élevée que possible.

Sur ce substrat 2, on dépose par épitaxie une couche tampon 4 de même composition que le substrat et d'une épaisseur d'au moins 1 micromètre environ, permettant d'offrir aux couches suivantes une surface d'appui de bonne planéité et de bonne qualité cristallographique. Cette couche 4 est notamment en GaAs non intentionnellement dopé. Cette couche 4 ainsi que toutes les autres couches semi-conductrices sont déposées par épitaxie par jet moléculaire (MBE) ou par dépôt chimique en phase vapeur à partir d'organométalliques (MOCVD).

On dépose ensuite, toujours par épitaxie, une couche de séparation 6 en matériau III-V, non intentionnellement dopé. Son rôle est d'éviter l'apparition d'une couche bidimensionnelle d'électrons à l'interface de la couche suivante. Avantageusement, la composition de la couche 6 croît continûment de celle de la couche tampon 4 à celle de la couche 8 juste au-dessus. L'épaisseur de cette couche 6 est de 100 à 200 nm dans cet exemple.

La couche 8 déposée par épitaxie sur la couche 6 constitue la première couche semi-conductrice sensible à la pression et à la température. Elle est constituée en $Al_xGa_{1-x}As$ avec x égal à 0,33. Elle est dopée de type n par des ions silicium à une concentration avantageusement au plus égale à $10^{17}$at/cm³. Son épaisseur est de 1 à 2 micromètres.

Avec une telle couche active 8, la couche de séparation 6 à gradient de composition est une couche en $Al_zGa_{1-z}As$ dont la composition z en aluminium croît progressivement de 0 à x, c'est-à-dire de 0 à 0,33 de sa surface inférieure à sa surface supérieure. Il est toutefois possible d'avoir une couche de séparation de composition constante, à condition que la teneur en aluminium soit au moins égale à celle de la couche active 8.

On forme ensuite par épitaxie sur la première couche active 8, une couche de séparation 10 en matériau III-V non intentionnellement dopé, dont l'énergie de bande de conduction est supérieure à celle de la couche active 8. Son rôle est de minimiser la fraction du courant qui passe dans la couche 8 dans les zones où cette dernière est empilée avec la seconde couche active 12. L'épaisseur de cette couche de séparation est ici de 1 à 2 micromètres. Elle est réalisée, en particulier, en $Al_yGa_{1-y}As$ avec y>x et par exemple égal à 0,40.

La seconde couche active, sensible à la pression et à la température 12, a la même composition que la couche 8 et est en particulier réalisée en $Al_xGa_{1-x}As$ avec x égal à 0,33 et son épaisseur est de 1 à 2 micromètres. Elle est dopée avec des ions de type n et en particulier des ions de silicium.

Elle se différencie de la couche 8 par sa concentration en ions dopants qui est ici de préférence supérieure à celle de la couche 8, soit dans cet exemple une concentration en ions silicium aux environs de $10^{18}$at/cm³.

La composition x=0,33 ± 2% en aluminium des couches 8 et 12 paraît correspondre à un optimum de la sensibilité des couches aux variations de pression.

On forme ensuite par épitaxie une couche de protection 14 en matériau III-V non intentionnellement dopé. Cette couche 14 peut avoir une composition identique ou différente de celle de la couche 12. Pour des raisons de simplification de fabrication, cette couche de protection est réalisée en un matériau de même composition que la couche 12 soit en $Al_xGa_{1-x}As$ avec x=0,33. Son épaisseur est de 1 à 2 micromètres.

On dépose ensuite par épitaxie une couche 16 de prise de contact électrique en matériau III-V dopé $n^+$. Dans ce cas particulier cette couche est du GaAs dopé avec du silicium à une concentration de l'ordre de $10^{19}at/cm^3$. Son épaisseur est de 5 à 50 nanomètres.

La structure se termine par le dépôt de plots de métallisation 18, par exemple par la technique "lift off" bien connue de l'homme de l'art, constitués en particulier d'un alliage d'or-germanium-nickel formé entre 450 et 500°C.

A ce stade de la fabrication, intervient un processus de gravure des différentes couches destiné à conduire en particulier à la structure des figures 1 et 2. La couche 16 est tout d'abord éliminée en dehors des plots métalliques par gravure. Ensuite, on effectue une première gravure des couches 4 à 14 de manière à former un premier et un second îlots respectivement dans une première zone 2a, à droite des figures 1 et 2 et dans une seconde zone 2b, à gauche des figures 1 et 2, séparées par une tranchée 20. Ces îlots sont taillés de façon à ce que ne subsistent que les couches semi-conductrices épitaxiées uniquement dans les deux zones 2a et 2b ; ailleurs le substrat 2 est découvert.

Dans la seconde zone 2b, on effectue ensuite une seconde gravure des couches supérieures 12 et 14 à l'exception des plots métalliques 22a et 22b de sorte qu'en dehors de ces derniers, la couche de séparation 10 constitue la couche externe.

Les plots de métallisation de l'îlot de la première zone 1a portent respectivement les références 22c et 22d.

Ces deux îlots constituent deux éléments résistifs dont la valeur de la résistance électrique varie avec la pression et la température, la dépendance en température de ces deux éléments étant très différente.

De façon connue, il est ensuite préférable de passiver le transducteur en le recouvrant d'une couche de passivation puis en effectuant des ouvertures juste en regard des plots de contacts 22a-22d ; ces derniers reçoivent ultérieurement une nouvelle couche de métallisation dépassant de la couche de passivation.

De préférence, comme représenté sur la figure 2, le canal de conduction de l'élément résistif de la première zone 2a est plus étroit que le canal de conduction de l'élément résistif de la seconde zone 2b, de façon que les résistances électriques des deux éléments soient du même ordre de grandeur. Cette configuration est obtenue lors de la première gravure des couches 4 à 14.

Dans une telle structure, les courants électriques dominants qui sont susceptibles d'être appliqués par des sources de courant extérieures entre les plots 22a et 22b d'une part et 22c et 22d d'autre part suivent essentiellement les chemins indiqués schématiquement par les flèches F1 et F2.

En particulier, dans le premier élément résistif dans lequel les deux couches actives sont empilées, le courant appliqué entre les plots 22c et 22d circule essentiellement dans la couche active supérieure 12 grâce à la présence de la couche de séparation 10 qui permet de minimiser la fraction de courant qui passe dans la couche active inférieure 8.

Si ces sources délivrent des courants constants et connus, les tensions délivrées entre les plots 22a et 22b d'une part et 22c et 22d d'autre part sont essentiellement représentatives de la résistivité respective de la couche active inférieure 8 et de la couche active supérieure 12. Par ailleurs, les résistivités des couches actives 8 et 12 sont essentiellement représentatives de la température et de la pression auxquelles est soumis le transducteur.

De façon que les deux îlots respectivement des zones 2a et 2b soient soumis à la même pression et à la même température, il est souhaitable que la distance $\underline{d}$ séparant les deux îlots, représentée sur la figure 2, soit la plus faible possible, typiquement de 20 micromètres.

La seconde gravure des couches 12 et 14 dans la seconde zone 2b doit être réalisée de manière à limiter l'épaisseur de gravure de la partie de la couche 10 constituant la couche externe du transducteur servant alors de couche de protection.

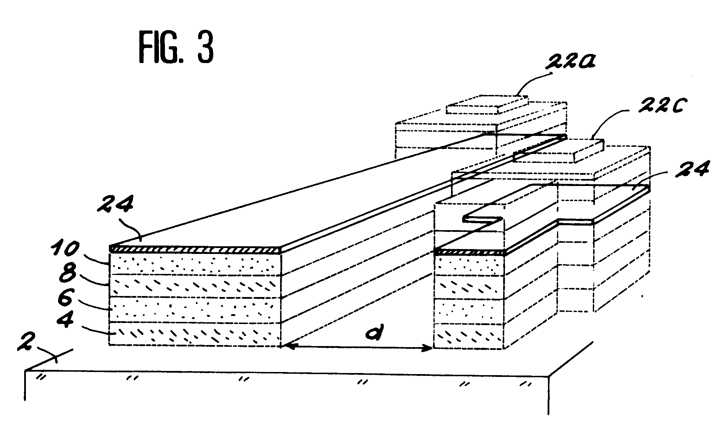

A cet effet, la gravure de la couche 12 peut être réalisée par gravure ionique réactive anisotrope avec un contrôle de l'arrêt de gravure, soit par le temps, soit en utilisant, comme représenté sur la figure 3, une couche d'arrêt de gravure 24 déposée par épitaxie sur la couche 10, juste avant l'épitaxie de la seconde couche active 12.

Cette couche d'arrêt de gravure 24 présente une très faible épaisseur de façon à ne pas perturber le fonctionnement du transducteur, typiquement une épaisseur de 20 nanomètres, et elle est réalisée en un matériau très différent de celui de la couche 12, par exemple en GaAs ou mieux en AlAs.

La forme de l'ensemble est telle que la distance entre les plots du premier îlot (2a) est très avantageusement inférieure au double de la quantité représentée par la racine carrée de : $rho_0.e_0/((rho_1/e_1)+(rho_2/e_2))$, dans laquelle $rho_0$, $rho_1$ et $rho_2$ sont les résistivités respectives de la couche d'isolation 10, de la couche 12 et de la couche 8 sensibles à la pression et à la température, et dans laquelle $e_0$, $e_1$ et $e_2$ sont les épaisseurs respectives de la couche d'isolation, de la couche sensible 12 et de la couche 8.

La distance entre les plots du second îlot (2b) est, quant à elle, de préférence supérieure à cette même quantité.

Le transducteur de l'invention peut être monté dans un ensemble tel que celui représenté dans le document FR-A-2 629 640 cité précédemment. En outre, d'autres procédés de fabrication que celui décrit ci-dessus peuvent être envisagés.

En particulier, il est possible d'épitaxier uniquement les couches 4 à 8, 14 et 16 et de graver ces couches pour qu'elles ne subsistent que dans la seconde zone 2b du transducteur et forment ainsi le second îlot ; de déposer ensuite par épitaxie sur l'ensemble de la stucture deux couches identiques aux couches 4 et 6, la couche 12 puis deux couches identiques à la couche 14 et à la couche 16 puis de graver l'ensemble de ces couches en s'arrêtant sur la couche 8 pour former le premier îlot. On forme ensuite les 4 plots métalliques par "lift off".

Dans cette configuration, les couches actives sont séparées, une pour chaque élément résistif ; la couche de séparation 10 n'est donc plus nécessaire.

Les variations des résistivités des couches sensibles 8 et 12 avec la température et donc des résistances des éléments résistifs correspondants dépendent fortement de la concentration en ions donneurs. Ceci ressort clairement des courbes données dans les figures 4 à 7.

Les courbes 4 à 5 concernent deux éléments résistifs constitués de couches sensibles en $Al_xGa_{1-x}As$ avec $x=0,33$ dopé par du silicium à des concentrations différentes : un premier élément résistif constitué d'une couche dopée à environ $5.10^{16}at/cm^3$ et un second élément résistif constitué d'une couche dopée à $10^{19}at/cm^3$. La résistance électrique, les sensibilités à la pression et à la température du premier élément résistif sont notées respectivement R1, Sp1 et ST1 tandis que la résistance électrique et les sensibilités à la pression et à la température du second élément résistif sont notées respectivement R2, Sp2 et ST2.

La dépendance en pression et en température de la résistance R2 a été déterminée expérimentalement et la dépendance en pression et en température de la résistance R1 est une extrapolation.

La figure 4 donne les variations de la sensibilité à la température en $°C^{-1}$ des premier et second éléments résistifs en fonction de la température en °C et la figure 5 donne les variations de la résistance en ohms de ces éléments résistifs en fonction de la température pour des réseaux de courbes R1 et R2 correspondant à des pressions constantes, les courbes de chacun de ces réseaux étant encadrées par des courbes de pression minimale $p_{min}$ et maximale $p_{max}$.

Comme le montre la figure 5, les sensibilités en pression des deux éléments résistifs sont voisines tandis que leurs sensibilités en température sont très différentes.

Les équations d'état R1(T,p) et R2(T,p) projetées dans le plan pression-température permettent d'établir des courbes d'"équirésistance", p(T), telles que représentées sur la figure 6. Les courbes R1 sont représentées en tirets et les courbes R2 en trait plein.

On constate sur ce diagramme qu'à chaque interception des courbes équirésistances R1 et R2 correspondent une seule valeur de la pression et une seule valeur de la température.

Puisque les courbes équirésistances R1 ne sont pas parallèles aux courbes R2, il est en outre possible de calculer la résolution en pression dp et la résolution en température dT pour chaque point du plan p.T.

Ces résolutions en pression et en température sont données respectivement par les équations (1) et (2) ci-après.

$$dp = \frac{\left|\dfrac{1}{ST1}\right| \times \dfrac{dR1}{R1} + \left|\dfrac{1}{ST2}\right| \times \dfrac{dR2}{R2}}{\left|\dfrac{Sp1}{ST1} - \dfrac{Sp2}{ST2}\right|} \qquad (1)$$

$$dT = \cfrac{\left|\dfrac{1}{Sp1}\right| \times \dfrac{dR1}{R1} + \left|\dfrac{1}{Sp2}\right| \times \dfrac{dR2}{R2}}{\left|\dfrac{ST1}{Sp1} - \dfrac{ST2}{Sp2}\right|} \qquad (2)$$

Les résolutions dp et dT sur la pression et la température peuvent donc être déterminées à partir de la sensibilité en pression et en température de chaque couche active et à partir de la résolution sur les mesures des résistances R1 et R2. Ces résolutions dépendent du circuit électronique associé au transducteur ainsi que des résolutions recherchées en fonction des différentes applications.

On donne ci-après, d'autres résultats expérimentaux obtenus à partir de deux échantillons dopés différemment ayant une sensibilité à la pression optimisée. Ces échantillons sont tous deux en $Al_xGa_{1-x}As$ avec x=0,33 dopé avec du silicium.

L'échantillon dopé faiblement contenait $8 \times 10^{16}$ at/cm$^3$ de silicium et l'échantillon le plus fortement dopé contenait $5.10^{18}$ at/cm$^3$ de silicium.

Sur la figure 7, les courbes en tirets sont les courbes équirésistances R1 de l'échantillon le moins dopé et les courbes en trait plein représentent les courbes équirésistances R2 de l'échantillon le plus dopé. Dans cet exemple, on obtient de bonnes performances de résolution pour des températures allant de 30 à 200°C.

Ainsi, après un étalonnage du transducteur en pression et température et mémorisation des données correspondantes en résistance R1 et R2, on peut par la mesure des résistances entre les plots 22a-22b et 22c-22d déterminer la pression et la température environnant le transducteur avec une bonne précision. Cette détermination peut être effectuée par un traitement électronique classique. Ainsi, par exemple, on applique en alternance aux deux éléments résistifs un courant constant à l'aide d'une source de courant puis on mesure la chute de tension aux bornes de chaque élément résistif. Cette information peut alors être numérisée par exemple à l'aide d'un convertisseur analogique-numérique.

A partir de ces signaux numérisés, on extrait l'information de pression et de température à l'aide d'un système à base de microprocesseurs dans lequel ont été au paravant mémorisés les points d'étalonnage des deux éléments résistifs pour différentes pressions et températures.

## Revendications

1. Transducteur de pression et/ou de température monolithique, comportant au moins deux couches semi-conductrices (8, 12) en matériaux III-V sensibles à la pression et à la température, une première couche (8) dopée par des impuretés du type donneur, à une première concentration, présentant une première résistivité en fonction de la pression et de la température, et une seconde couche (12) dopée par des impuretés du type donneur, à une seconde concentration différente de la première concentration, présentant une seconde résistivité fonction de la pression et de la température et dont la dépendance en température est différente de celle de la première résistivité, ces deux couches étant supportées par un même substrat (2) en matériau III-V.

2. Transducteur selon la revendication 1, caractérisé en ce que les couches (8, 12) sensibles à la pression et à la température sont sensiblement de même composition.

3. Transducteur selon la revendication 1 ou 2, caractérisé en ce que les couches sensibles sont en $Al_xGa_{1-x}As$, dont la composition x en aluminium est choisie dans l'intervalle de 0,22 à 0,40 et en ce que le substrat est en GaAs.

4. Transducteur selon la revendication 3, caractérisé en ce que x est compris entre 0,30 et 0,35.

5. Transducteur selon l'une quelconque des revendications précédentes, caractérisé en ce que les couches sensibles sont dopées par des ions des éléments de la colonne IV du tableau périodique contenant le silicium.

6. Transducteur selon l'une quelconque des revendications précédentes, caractérisé en ce que les deux couches sensibles sont empilées les unes sur les autres et séparées par une couche de séparation (10) en matériau III-V présentant une largeur de bande interdite supérieure à celle des couches sensibles.

7. Transducteur selon la revendication 6, caractérisé en ce que la couche de séparation est en $Al_yGa_{1-y}As$ non intentionnellement dopé, avec y supérieur à x et choisi dans l'intervalle de 0,25 à 0,50.

8. Transducteur selon la revendication 7, caractérisé en ce que y est égal à 0,40.

9. Transducteur selon l'une quelconque des revendications 3 à 8, caractérisé en ce que la première couche sensible (8) est en $Al_xGa_{1-x}As$ dopé n à une concentration $\leqq 10^{17}$ at/cm$^3$ et en ce que la seconde couche sensible (12) est en $Al_xGa_{1-x}As$ dopé n à concentration $\geqq 10^{18}$at/cm$^3$.

10. Transducteur selon la revendication 9, caractérisé en ce qu'il comprend, empilées sur le substrat (2) en GaAs, une couche tampon (4) en GaAs non intentionnellement dopé, une couche de séparation (6) en $Al_zGa_{1-z}As$ non intentionnellement dopé dont la composition z en aluminium croît progressivement de 0 à x, une couche active inférieure (8) en $Al_xGa_{1-x}As$ dopé n, une couche de séparation (10) en $Al_yGa_{1-y}As$ non intentionnellement dopé avec $0,25 \leqq y \leqq 0,50$ et y>x, une couche active supérieure (12) en $Al_xGa_{1-x}As$ dopé n, une couche de protection (14) en $Al_tGa_{1-t}As$ non intentionnellement dopé avec $0,22 \leqq t \leqq 0,60$, une couche de prise de contact (16) en GaAs dopé n et une couche de contacts métalliques (18).

11. Transducteur selon l'une quelconque des revendications 6 à 10, caractérisé en ce qu'il comprend un premier élément résistif (2a) comprenant une première zone de la première couche sensible (8) et une zone de la seconde couche sensible (12) empilées et séparées par la couche de séparation, et un second élément résistif (2b) comprenant une seconde zone de cette première couche sensible (8).

12. Transducteur selon l'une quelconque des revendications 6 à 11, caractérisé en ce que la couche sensible (8) présentant la concentration d'ions dopant la moins élevée est située entre l'autre couche sensible (12) et le substrat.

13. Transducteur selon la revendication 11 ou 12, caractérisé en ce que le premier élément résistif comprend en outre une première paire de contacts métalliques (22c, 22d) établis sur la zone de la seconde couche sensible (12), séparés l'un de l'autre, et en ce que ce second élément résistif comprend une seconde paire de contacts métalliques (22a, 22b) établis sur la seconde zone de la première couche sensible, séparés l'un de l'autre.

## Patentansprüche

1. Monolithischer Druck- und/oder Temperaturwandler, umfassend mindestens zwei Halbleiterschichten (8, 12) aus III-V-Material, die gegenüber Druck und Temperatur empfindlich sind, wobei eine erste Schicht (8) mit Dotierungsmitteln vom Donatortyp mit einer ersten Konzentration dotiert ist, wobei sie einen ersten spezifischen Widerstand in Abhängigkeit von dem Druck und der Temperatur besitzt, und wobei eine zweite Schicht (12) mit einer zweiten, von der ersten abweichenden Konzentration mit Dotierungsmitteln vom Donatortyp dotiert ist, und einen zweiten spezifischen Widerstand in Abhängigkeit vom Druck und der Temperatur aufweist und dessen Abhängigkeit von der Temperatur abweicht von jener des ersten spezifischen Widerstandes, welche beiden Schichten von ein und demselben Substrat (2) aus III-V-Material abgestützt sind.

2. Wandler nach Anspruch 1, dadurch gekennzeichnet, daß die gegenüber Druck und Temperatur empfindlichen Schichten (8, 12) im wesentlichen gleiche Zusammensetzung aufweisen.

3. Wandler nach Anspruch 1 oder 2, dadurch gekennzeichnet, daß die empfindlichen Schichten aus $Al_xGal_{1-x}As$ bestehen, dessen Zusammensetzung x an Aluminium im Intervall von 0,22 bis 0,40 gewählt ist und daß das Substrat aus GaAs besteht.

4. Wandler nach Anspruch 3, dadurch gekennzeichnet, daß x zwischen 0,30 und 0,35 liegt.

5. Wandler nach einem der vorangehenden Ansprüche, dadurch gekennzeichnet, daß die empfindlichen Schichten mit Ionen von Elementen aus der Spalte IV des Periodensystems, welche Silicium enthält, dotiert sind.

6. Wandler nach einem der vorangehenden Ansprüche, dadurch gekennzeichnet, daß die beiden empfindlichen Schichten übereinandergelegt sind und von einer Trennschicht (10) aus III-V-Material getrennt sind mit einer Breite des verbotenen Bandes oberhalb der der empfindlichen Schichten.

7. Wandler nach Anspruch 6, dadurch gekennzeichnet, daß die Trennschicht aus $Al_yGa_{1-y}As$ ohne absichtliche Dotierung besteht mit y oberhalb x und ausgewählt im Intervall von 0,25 bis 0,50.

8. Wandler nach Anspruch 7, dadurch gekennzeichnet, daß y gleich 0,40 ist.

9. Wandler nach einem der Ansprüche 3 bis 8, dadurch gekennzeichnet, daß die erste empfindliche Schicht (8) aus $Al_xGa_{1-x}As$ besteht, n-dotiert mit einer Konzentration $\leq 10^{17}$ at/cm³, und daß die zweite empfindliche Schicht (12) aus $Al_xGa_{1-x}As$ besteht, n-dotiert mit einer Konzentration $\geq 10^{18}$ at/cm³.

10. Wandler nach Anspruch 9, dadurch gekennzeichnet, daß er geschichtet auf dem Substrat (2) aus GaAs eine nicht absichtlich dotierte Pufferschicht (4) aus GaAs, eine nicht absichtlich dotierte Trennschicht (6) aus $Al_zGa_{1-z}As$, deren Zusammensetzung z an Aluminium progressiv von 0 bis x ansteigt, eine untere aktive Schicht (8) aus n-dotiertem $Al_xGa_{1-x}As$, eine nicht absichtlich dotierte Trennschicht (10) aus $Al_yGa_{1-y}As$ mit $0,25 \leq y \leq 0,50$ und y>x, eine obere aktive Schicht (12) aus n-dotiertem $Al_xGa_{1-x}As$, eine Schutzschicht (14) aus nicht absichtlich dotiertem $Al_tGa_{1-t}As$ mit $0,22 \leq t \leq 0,60$, eine Kontaktierungsschicht (16) aus $n^+$-dotiertem GaAs und eine metallische Kontaktschicht (18) umfaßt.

11. Wandler nach einem der Ansprüche 6 bis 10, dadurch gekennzeichnet, daß er ein erstes Widerstandselement (2a) umfaßt, das eine erste Zone der ersten empfindlichen Schicht (8) und eine darüberliegende, durch die Trennschicht getrennte Zone der zweiten sensiblen Schicht (12) umfaßt, und ein zweites Widerstandselement (2b), umfassend eine zweite Zone dieser ersten sensiblen Schicht (8).

12. Wandler nach einem der Ansprüche 6 bis 11, dadurch gekennzeichnet, daß die empfindliche Schicht (8) mit der am wenigsten hochliegenden Dotierungs-Ionenkonzentration sich zwischen der anderen empfindlichen Schicht (12) und dem Substrat befindet.

13. Wandler nach Anspruch 11 oder 12, dadurch gekennzeichnet, daß das erste Widerstandselement ferner ein erstes Paar metallischer Kontakte (22c, 22d), etabliert auf der Zone der zweiten sensiblen Schicht (12) und voneinander getrennt, umfaßt und daß dieses zweite Widerstandselement ein zweites Paar von auf der zweiten Zone der ersten empfindlichen Schicht angeordnetes Paar von metallischen Kontakten (22a, 22b), voneinander getrennt, umfaßt.

## Claims

1. A monolithic pressure and/or temperature transducer comprising at least two sensitive semiconductor layers (8, 12) of III-V material sensitive to pressure and to temperature, a first layer (8) doped with donor type impurities at a first concentration and having a first resisitivity as a function of pressure and of temperature, and a second layer (12) doped with donor type impurities at a second concentration different from the first concentration and having a second resistivity as a function of pressure and of temperature, and depending on temperature in a different manner to the first resistivity, said two layers being supported by a common substrate (2) of III-V material.

2. A transducer according to claim 1, characterized in that the sensitive layers (8, 12) sensitive to pressure and temperature are of substantially the same composition.

3. A transducer according to claim 1 or 2, characterized in that the sensitive layers are made of $Al_xGa_{1-x}As$, where the aluminum fraction x is selected to lie in the range 0.22 to 0.40, and in that the substrate is made of GaAs.

4. A transducer according to claim 3, characterized in that x lies in the range 0.30 to 0.35.

5. A transducer according to any preceding claim, characterized in that the sensitive layers are doped with

EP 0 454 544 B1

ions of elements from column IV of the periodic table including silicon.

6. A transducer according to any preceding claim, characterized in that the two sensitive layers overlie each other and are separated by a separator layer (10) of III-V material having a forbidden band of greater width than that of the sensitive layers.

7. A transducer according to claim 6, characterized in that the separator layer is made of $Al_yGa_{1-y}As$ which is not intentionally doped, where y is greater than x and is selected to lie in the range 0.25 to 0.50.

8. A transducer according to claim 7, characterized in that y is equal to 0.40.

9. A transducer according to any one of claims 3 to 8, characterized in that the first sensitive layer (8) is made of $Al_xGa_{1-x}As$ that is N-doped to a concentration $\leq 10^{17}$ atoms/cm³, and in that the second sensitive layer (8) is made of $Al_xGa_{1-x}As$ that is N-doped to a concentration $\geq 10^{18}$ atoms/cm³ .

10. A transducer according to claim 9, characterized in that it comprises, overlying the GaAs substrate (2): a buffer layer (4) of GaAs that is not intentionally doped; a separator layer (6) of $Al_zGa_{1-z}As$ that is not intentionally doped and in which the aluminum fraction z increases smoothly from 0 to x, a bottom active layer (8) of $Al_xGa_{1-x}As$ that is N-doped; a separator layer (10) of $Al_yGa_{1-y}As$ that is not intentionally doped where $0.25 \leq y \leq 0.50$ and y > x; a top active layer (12) of $Al_xGa_{1-x}As$ that is N-doped; a protective layer (14) of $Al_tGa_{1-t}As$ that is not intentionally doped, with $0.22 \leq t \leq 0.60$; a contact-making layer (16) of N-doped GaAs; and a metal contact layer (18).

11. A transducer according to any one of claims 6 to 10, characterized in that it comprises a first resistive device (2a) comprising a first zone of the first sensitive layer (8) and a zone of the second sensitive layer (12) that overlies each other and that are separated by the separator layer, and a second resistive device (2b) comprising a second zone of said first sensitive layer (8).

12. A transducer according to any one of claims 6 to 11, characterized in that the sensitive layer (8) having the lower concentration of doping ions is situated between the other sensitive layer (12) and the substrate.

13. A transducer according to claim 11 or 12, characterized in that the first resistive device further includes a first pair of metal contacts (22c, 22d) established on the zone of the second sensitive layer (12) and separated from each other, and in that the second resistive device includes a second pair of metal contacts (22a, 22b) established on the second zone of the first sensitive layer, and separated from each other.

FIG. 1

FIG. 2

FIG. 3

EP 0 454 544 B1

FIG. 4

FIG. 5

FIG. 6

FIG. 7